# EUROPÄISCHE PATENTANMELDUNG

(11) **EP 3 285 060 A1**
(43) Veröffentlichungstag der Anmeldung: **21.02.2018**
(21) Anmeldenummer: 16184692.8
(22) Anmeldetag: 18.08.2016
(51) Int. Cl.: G01N 3/08

(54) **VORRICHTUNG UND VERFAHREN ZUR ZUGPRÜFUNG**

(71) Anmelder: GWP Gesellschaft Für Werkstoffprüfung MbH, 85604 Zorneding (DE)
(72) Erfinder: Nickl, Julius, 83553 Jakobneuharting (DE)
(74) Vertreter: Andrae | Westendorp Patentanwälte Partnerschaft

(57) **Zusammenfassung**

Die Erfindung betrifft eine Vorrichtung aufweisend
- wenigstens ein erstes Werkzeug zur Erzeugung eines Prüfkörpers (2) in einem Werkstück (1), wobei der erzeugte Prüfkörper (2) dabei zumindest teilweise mit dem Werkstück (1) verbunden bleibt und
- wenigstens ein zweites Werkzeug (6) mit einer angeschlossenen Zugprüfvorrichtung (7) zur Durchführung einer Zugprüfung am erzeugten Prüfkörper

## Beschreibung

Die Erfindung betrifft eine Vorrichtung zur Zugprüfung und ein Verfahren zur Zugprüfung.

Aus dem Stand der Technik sind Zugprüfungen seit langem bekannt. Mittels Zugprüfvorrichtungen lassen sich die Streckgrenze, die Zugfestigkeit und die Bruchdehnung eines Bauteils ermitteln. Der Zugversuch ist ein genormtes Standardverfahren der Werkstoffprüfung, wobei als Bauteile insbesondere metallische Werkstoffe im Zugversuch geprüft werden.

Um eine Zugprüfung an Werkstoffen durchführen zu können werden diese in Form eines Prüfkörpers in die bekannten Zugprüfvorrichtungen eingesetzt. Zuvor müssen die Prüfkörper aus einem Werkstück, wie Motorblöcken oder Strukturbauteilen, entnommen und entsprechend in Form gebracht werden. Damit gestaltet sich die Durchführung einer Zugprüfung von Bauteilen als zeitaufwendig und kostenintensiv.

Es besteht somit die technische Aufgabe die Nachteile aus dem Stand der Technik zu überwinden.

Die Aufgabe wird erfindungsgemäß insbesondere gelöst durch eine Vorrichtung aufweisend
- wenigstens ein erstes Werkzeug zur Erzeugung eines Prüfkörpers in einem Werkstück, wobei der erzeugte Prüfkörper dabei zumindest teilweise mit dem Werkstück verbunden bleibt und
- wenigstens ein zweites Werkzeug mit einer angeschlossenen Zugprüfvorrichtung zur Durchführung einer Zugprüfung am erzeugten Prüfkörper im Werkstück.

Durch das Vorsehen der Vorrichtung werden eine bekannte Drehmaschine und eine nachgeschaltete Zugprüfmaschine ersetzt, was eine Zeitersparnis bei weniger Personal mit sich bringt. Mit der Vorrichtung ist zum einen eine vollautomatische Proben- bzw. Prüfkörperherstellung realisierbar. Zum anderen ist eine vollautomatische, miniaturisierte Zugprüfung im Bauteil realisierbar. Die Zugprüfvorrichtung ist kostengünstiger, steifer und kleiner als die bekannten Zugprüfvorrichtungen. Dabei kann der Prüfkörper auch im abgerissen Zustand nach der Zugprüfung im Bauteil verbleiben.

Vorzugsweise ist die Zugprüfvorrichtung ein Zugprüfwerkzeug, insbesondere ein miniaturisiertes Zugprüfwerkzeug. Bevorzugt ist die Zugprüfvorrichtung an dem zweiten Werkzeug angeschlossen, d.h. verbunden. Dabei ist das zweite Werkzeug eingerichtet, die Zugprüfvorrichtung zu aktivieren, d.h. anzutreiben.

Vorzugsweise dient die Vorrichtung dem Bearbeiten des Werkstücks. Bevorzugt ist das erste Werkzeug ein spanabhebendes Werkzeug. Bevorzugt ist das erste Werkzeug als Fräskopf oder als Oberflächenverfeinungsmittel mit einer Spanabhebung ausgebildet. Besonders bevorzugt ist das zweite Werkzeug ebenfalls als Fräskopf oder als Oberflächenverfeinungsmittel mit einer Spanabhebung ausgebildet.

Vorzugsweise ist die Vorrichtung eine Maschine mit Achsen, die gesteuert verfahrbar sind. Bevorzugt ist die Vorrichtung eine Werkzeugmaschine. Besonders bevorzugt ist die Vorrichtung eine CNC-Fräse. Vorzugsweise ist das Werkzeug einer CNC-Fräse eine austauschbare Komponente, bspw. ein Schruppwerkzeug, Taschenfräser, Kugelfräser oder Messfühler, etc.. Bevorzugt weist die CNC-Fräse eine Spindel auf. Vorzugsweise dient die Spindel der Aufnahme des Werkzeugs.

Vorzugsweise weist die Vorrichtung neben einem ersten und zweiten Werkzeug weitere Werkzeuge auf, die eingerichtet sind, Prüfkörper im Werkstück zu erzeugen und/oder Zugprüfungen am erzeugten Prüfkörper durchführen.

Vorzugsweise ist das Werkstück ein Metallbauteil. Bevorzugt ist das Werkstück ein Vollaluminiumbauteil, z.B. Motorblock aus Gravitationsguss oder dünne Al-Strukturbauteile aus Al-Druckguss. Besonders bevorzugt ist das fertig gefräste Werkstück ein Motorblock mit dem Prüfkörper, der im Motorblock bzw. innerhalb des Motorblocks angeordnet und mit diesem verbunden ist.

Vorzugsweise weist der Prüfkörper eine Form auf, die eine Zugprüfung ermöglicht. Bevorzugt weist der Prüfkörper einen oberen Flansch, einen unteren Bereich und einen den oberen Flansch und den unteren Bereich verbindenden Steg auf. Der Prüfkörper ist zumindest teilweise mit dem Werkstück über den unteren Bereich mit dem Werkstück verbunden.

Besonders bevorzugt weist der Prüfkörper die Form eines "Knochens" auf, wie aus dem Stand der Technik bekannt, wobei ein Ende des Knochens mit dem Werkstück verbunden ist.

Alternativ weist der Prüfkörper an einem seiner Enden ein Gewinde auf, um eine Zugprüfung zu ermöglichen.

In einer weiteren erfindungsgemäßen Ausführungsform ist die Zugprüfvorrichtung als ein Zugsystem, ein Hebelsystem, ein Hydrauliksystem oder ein Zugspindelsystem ausgebildet.

Damit sind unterschiedliche Möglichkeiten vorgesehen, eine Zugprüfung auszuführen.

In einer weiteren erfindungsgemäßen Ausführungsform weist die Zugprüfvorrichtung ein Aufnahmemittel zur Fixierung am Flansch des Prüfkörpers, ein Zugmittel zur Zugaufnahme und einen Kraftmesser zur Bestimmung der Zugkraft des Prüfkörpers auf.

Mittels der Fixierung ist das Aufnahmemittel fest am Flansch befestigbar, mittels des Zugmittels sind Zugkräfte aufnehmbar und übertragbar und mittels des Kraftmessers lassen sich Zugkräfte einfach ermitteln.

Vorzugsweise weist das Aufnahmemittel eine Form auf, die den Flansch umgreift. Vorzugsweise ist der Kraftmesser als eine Kraftmessdose ausgebildet. Vorzugsweise ist das Zugmittel ein zugaufnehmendes Mittel und/oder ein zugübertragendes Mittel, insbesondere ein Kolben.

In einer weiteren erfindungsgemäßen Ausführungsform sind das Zugsystem, das Hebelsystem und das Hydrauliksystem eingerichtet, infolge einer vom zweiten Werkzeug erzeugten Kraft, eine Zugprüfung am Prüfkörper auszuführen.

Hierdurch wird das Erzeugen der Zugkraft am Prüfkörper mittels einfacher Mechanik ermöglicht. Bevorzugt ist die erzeugte Kraft eine Zug- oder eine Druckkraft.

Vorzugsweise weist das Zugsystem ein Zugmittel oder eine Zugeinrichtung auf, die infolge einer vom zweiten Werkzeug ausgelösten Zugkrafteinwirkung das Zugsystem auslöst. Bevorzugt zieht das zweite Werkzeug axial am Zugmittel oder der Zugeinrichtung. Damit kann das Zugsystem auf sehr einfache Art und Weise ausgelöst werden.

Vorzugsweise weist das Hebelsystem neben einem Zugmittel eine Hebelkonstruktion oder eine Hebelübersetzung auf, die infolge einer vom zweiten Werkzeug ausgelösten Druckkrafteinwirkung das Zugmittel auslöst. Bevorzugt drückt das zweite Werkzeug axial auf die Hebelkonstruktion oder die Hebelübersetzung. Damit kann das Hebelsystem sehr definiert und fein ausgelöst werden.

Vorzugsweise weist das Hydrauliksystem neben einem Zugmittel einen hydraulischen Antrieb auf, der infolge einer vom zweiten Werkzeug ausgelösten Druckkrafteinwirkung das Zugmittel auslöst. Damit weist das Hydrauliksystem einen einfachen und kompakten Aufbau auf. Bevorzugt ist eine hydraulische Kraft durch Drücken mit dem zweiten Werkzeug auf radialstehende kleine Hydraulikkolben erzeugbar. Besonders bevorzugt ist ein externes Hydraulikaggregat verwendbar, um ein hydraulisches Ziehen zu ermöglichen.

Vorzugsweise ist auch der Fräskopf oder das Oberflächenverfeinungsmittel eingerichtet die Zugprüfvorrichtung zu aktivieren.

In einer weiteren erfindungsgemäßen Ausführungsform ist das Zugspindelsystem eingerichtet, infolge einer vom zweiten Werkzeug erzeugten Drehung, eine Zugprüfung am Prüfkörper auszuführen.

Hierdurch ist das Erzeugen der Zugkraft am Prüfkörper mittels einfacher Mechanik möglich.

Vorzugsweise weist das Hydrauliksystem neben einem Zugmittel einen Spindelantrieb auf, der infolge einer vom zweiten Werkzeug ausgelösten Drehkrafteinwirkung das Zugmittel auslöst. Bevorzug weist das Hydrauliksystem eine Dreifach-Zugspindel mit einem Planetengetriebe auf. Vorteile sind die geringe Bauhöhe gegenüber Spindelkonzepten mit nur einer Spindel, eine geringe Belastung der Zugspindel mit dem Getriebe und ein geringeres Drehmoment und Gegenmoment. Besonders bevorzugt ist als alternativer Antrieb ein Elektromotor vorgesehen, um eine konstante Rotation zu gewährleisten.

Vorzugsweise ist auch der Fräskopf oder das Oberflächenverfeinungsmittel eingerichtet die Zugprüfvorrichtung zu aktivieren.

In einer weiteren erfindungsgemäßen Ausführungsform weist das zweite Werkzeug einen am Prüfkörper anbringbaren Extensometer zur Bestimmung der Dehnung des Prüfkörpers auf.

Damit ist ein Bestimmen der Dehnung mittels einfacher Mechanik möglich. Vorzugsweise ist unter einer Bestimmung ein Messen zu verstehen.

Vorzugsweise wird der Extensometer im Stegbereich des Prüfkörpers angebracht. Bevorzugt ist der Extensometer als ein Anklemmextensometer ausgebildet.

In einer weiteren erfindungsgemäßen Ausführungsform weist die Vorrichtung eine Recheneinheit auf, zur Bestimmung
- der Dehnung des Prüfkörpers,
- der Zugkraft des Prüfkörpers,
- des Spannung-Dehnungsverhaltens des Prüfkörpers und
- des Versagenszeitpunkts des Prüfkörpers
und ein elektronisches Anzeigengerät zur Abbildung der mit der Recheneinheit bestimmten Werte.

Ferner wird die Aufgabe erfindungsgemäß insbesondere gelöst durch ein Verfahren zur Erzeugung eines Prüfkörpers und zur Durchführung einer Zugprüfung mittels einer Vorrichtung aufweisend
- wenigstens ein erstes Werkzeug, das den Prüfkörper im Werkstück erzeugt, wobei der Prüfkörper dabei zumindest teilweise mit dem Werkstück verbunden bleibt und
- wenigstens ein zweites Werkzeug mit einer angeschlossenen Zugprüfvorrichtung, die eine Zugprüfung am erzeugten Prüfkörper im Werkstück durchführt.

In einer weiteren erfindungsgemäßen Ausführungsform weist das Verfahren die Schritte auf:
- Fräsen des Werkstücks mittels des ersten Werkzeugs zur Erzeugung des Prüfkörpers,
- Anbringen eines Aufnahmemittels der Zugprüfvorrichtung am Flansch des Prüfkörpers,
- Aufbringen einer Kraft oder eines Moments infolge einer Aktivierung des zweiten Werkzeugs auf die Zugprüfvorrichtung zur Erzeugung einer Zugkraft auf den Prüfkörper und
- Durchführen einer Zugprüfung am Prüfkörper.

In einer weiteren erfindungsgemäßen Ausführungsform weist das Verfahren den Schritt auf:
- Bestimmen der Dehnung des Prüfkörpers mittels eines Extensometers und Abbilden der Dehnung des Prüfkörpers mittels eines elektronischen Anzeigegeräts,
- Bestimmen der Zugkraft des Prüfkörpers mittels eines Kraftmessers und Abbilden der Zugkraft mittels des elektronischen Anzeigegeräts,
- Bestimmen eines Spannung-Dehnungsverhaltens des Prüfkörpers mittels einer Recheneinheit und Abbilden des Spannung-Dehnungsverhaltens mittels des elektronischen Anzeigegeräts, und/oder
- Bestimmen des Versagenszeitpunkts des Prüfkörpers und Abbilden des Versagenszeitpunkts mittels des elektronischen Anzeigegeräts.

Dabei ergibt sich das Spannung-Dehnungsverhalten aus den ermittelten Werten der Zugkraft und der Dehnung des Prüfkörpers.

Die Erfindung wird nun beispielhaft durch Figuren veranschaulicht. Es zeigen:
Fig. 1 einen schematischen Schnitt durch ein Werkstück mit dem Prüfkörper,
Fig. 2 einen weiteren schematischen Schnitt durch das Werkstück aus Fig. 1 mit einem zweiten Werkzeug und einem Zugsystem als Zugprüfvorrichtung der erfindungsgemäßen Vorrichtung,
Fig. 3 einen weiteren schematischen Schnitt durch das Werkstück aus Fig. 1 mit einem zweiten Werkzeug und einem Hydrauliksystem als Zugprüfvorrichtung der erfindungsgemäßen Vorrichtung,
Fig. 4 einen weiteren schematischen Schnitt durch das Werkstück aus Fig. 1 mit einem zweiten Werkzeug und einem Hebelsystem als Zugprüfvorrichtung der erfindungsgemäßen Vorrichtung und
Fig. 5 einen weiteren schematischen Schnitt durch das Werkstück aus Fig. 1 mit einem zweiten Werkzeug und einem Zugspindelsystem als Zugprüfvorrichtung der erfindungsgemäßen Vorrichtung.

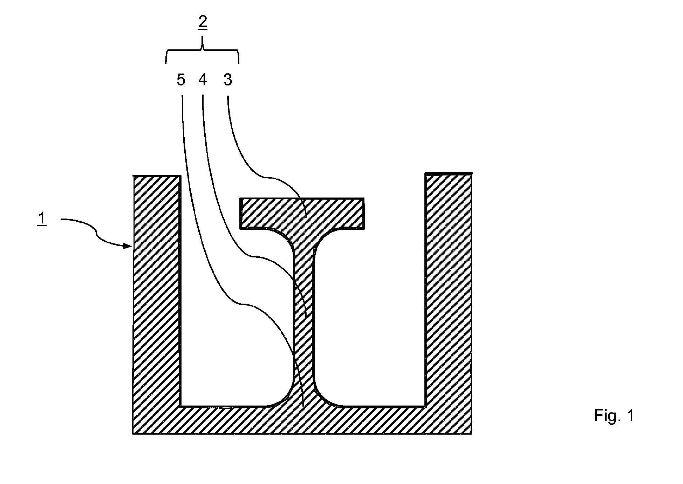

Fig. 1 zeigt den schematischen Schnitt durch das Werkstück 1 mit dem Prüfkörper 2. Dabei weist das Werkstück 1 den Prüfkörper 2 auf. Der Prüfkörper 2 weist einen oberen Flansch 3, einen unteren Bereich 5 und einen den oberen Flansch 3 und den unteren Bereich 5 verbindenden Steg 4 auf. Der Prüfkörper 2 ist zumindest teilweise mit dem Werkstück 1 über seinen unteren Bereich 5 mit dem Werkstück 1 verbunden. Der Prüfkörper 2 wurde zumindest teilweise aus dem Werkstück 1 herausgefräst. Ein Fräsen des Prüfkörpers 2 erfolgt mittels eines ersten Werkzeugs (nicht gezeigt) einer Vorrichtung, die bevorzugt als eine Werkzeugmaschine ausgebildet ist.

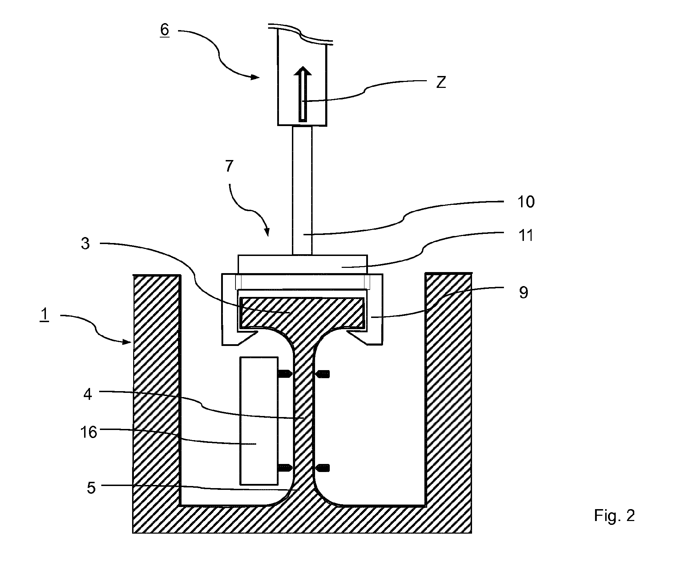

Ferner weist die Vorrichtung neben dem ersten Werkzeug ein zweites Werkzeug 6 zur Durchführung einer Zugprüfung am erzeugten Prüfkörper 2 im Werkstück 1 auf, wie in den Fig. 2 bis 5 gezeigt.

Die Fig. 2 bis 5 zeigen weitere schematische Schnitte durch das Werkstück 1 aus Fig. 1 mit dem zweiten Werkzeug 6 und den verschiedenen Zugprüfvorrichtungen 7 der erfindungsgemäßen Vorrichtung.

Jede Zugprüfvorrichtung 7 weist ein Aufnahmemittel 9, ein Zug aufnehmendes Mittel 10 und einen Kraftmesser 11 auf. Das Aufnahmemittel 9 weist eine Form auf, die den oberen Flansch 3 umgreift. Der Kraftmesser 11 ist zwischen dem Aufnahmemittel 9 und dem Zugmittel angeordnet. Der Kraftmesser 11 ist als eine Kraftmessdose ausgebildet.

Mit der Zugprüfvorrichtung 7 wird eine Verlagerung des Aufnahmemittels 9 in bzw. entlang einer Steglängsachse des Prüfkörpers 2 realisiert und damit eine Messung der Zugkraft ermöglicht.

Ferner weist jedes zweite Werkzeug 6 einen am Prüfkörper 2 anbringbaren Extensometer 16 zur Bestimmung der Dehnung des Prüfkörpers 2 auf. Nachdem das zweite Werkzeug 6 auf den Prüfkörper 2 aufgesetzt wurde und der Flansch 3 vom Aufnahmemittel 9 umschlossen wurde, klappt von der Seite der Extensometer 16 mit seinen Schneiden an die Prüfstrecke an, d.h. an den Steg 4 des Prüfkörpers 2. Der Extensometer 16 weist zwei Schneiden auf, die mit einem Federdruck beaufschlagt sind. Die Schneiden bleiben in Position und der Extensometer 16 registriert die Abstandsverlängerung der beiden Schneiden während der Zugprüfung. Eine Datenübertragung erfolgt vorzugsweise mittels Telemetrie oder Bluetooth. Bevorzugt ist der Extensometer 16 batteriebetrieben.

Fig. 2 zeigt den schematischen Schnitt durch das Werkstück 1 aus Fig. 1 mit dem zweiten Werkzeug 6 und dem Zugsystem als Zugprüfvorrichtung 7.

Das zweite Werkzeug 6 ist mit einem Ende des Zugmittels 10 zugfest verbunden. Das Zugsystem ist eingerichtet, infolge einer vom zweiten Werkzeug 6 erzeugten Zugkraft Z auf das Zugmittel 10, eine Zugprüfung am Prüfkörper 2 auszuführen.

Infolge einer Aktivierung des zweiten Werkzeugs 6 erfährt das Zugmittel 10 eine Zugkraft Z, wobei sich das Aufnahmemittel 9 gegenüber seiner Ausgangslage in bzw. entlang der Steglängsachse des Prüfkörpers 2 verlagert. Damit ist das Zugsystem auf sehr einfache Art und Weise auslösbar.

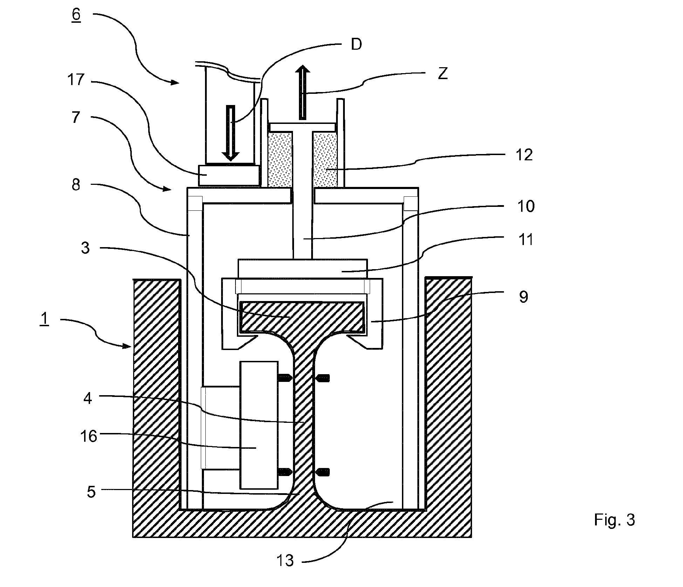

Fig. 3 zeigt den schematischen Schnitt durch das Werkstück 1 aus Fig. 1 mit dem zweiten Werkzeug 6 und dem Hydrauliksystem als Zugprüfvorrichtung 7.

Das Hydrauliksystem weist neben dem Zugaufnahmemittel 9, dem Zugmittel 10 und dem Kraftmesser 11 ein Mittel 8 zur Abstützung auf. Das Mittel 8 ist als ein statisches Joch ausgebildet und liegt an seinem offenen Ende in einem ausgefrästen Bereich 13 des Werkstücks 1 auf. Ferner weist das Hydrauliksystem einen hydraulischen Antrieb 12 auf.

Eine hydraulische Kraft ist durch Drücken des zweiten Werkzeugs 6 auf radialstehende kleine Hydraulikkolben 17 des hydraulischen Antriebs 12 erzeugbar. Das Hydrauliksystem ist eingerichtet, infolge einer vom zweiten Werkzeug 6 erzeugten Druckkraft auf die Hydraulikkolben 17 des Hydrauliksystem, eine Zugprüfung am Prüfkörper 2 auszuführen.

Infolge einer Aktivierung des zweiten Werkzeugs 6 erfährt das Zugmittel 10 eine Zugkraft Z, wobei sich das Aufnahmemittel 9 gegenüber dem Mittel 8 in bzw. entlang der Steglängsachse des Prüfkörpers 2 verlagert.

Alternativ kann auch ein Hydraulikaggregat vorgesehen sein, um ein hydraulisches Ziehen zu ermöglichen.

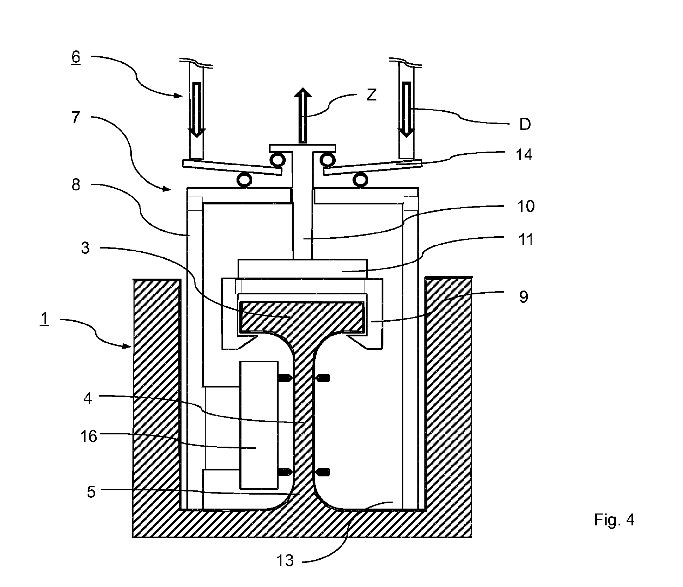

Fig. 4 zeigt den schematischen Schnitt durch das Werkstück 1 aus Fig. 1 mit dem zweiten Werkzeug 6 und dem Hebelsystem als Zugprüfvorrichtung 7.

Das Hebelsystem weist neben dem Zugaufnahmemittel 9, dem Zugmittel 10 und dem Kraftmesser 11 ein Mittel 8 zur Abstützung auf. Das Mittel 8 ist als ein statisches Joch ausgebildet und liegt an seinem offenen Ende in einem ausgefrästen Bereich 13 des Werkstücks 1 auf. Das Hebelsystem weist zwei drehbar gelagerte Hebel 14 auf, die mit dem Zugmittel 10 verbunden sind.

Das Hebelsystem ist eingerichtet, infolge einer vom zweiten Werkzeug 6 erzeugten Druckkraft D auf die drehbar gelagerten Hebel 14 des Hebelsystems eine Zugprüfung am Prüfkörper 2 auszuführen.

Infolge einer Aktivierung des zweiten Werkzeugs 6 erfährt das Zugmittel 10 über die Verdrehung der Hebel 14 eine Zugkraft Z, wobei sich das Aufnahmemittel 9 gegenüber dem Mittel 8 in bzw. entlang der Steglängsachse des Prüfkörpers 2 verlagert. Damit kann das Hebelsystem sehr definiert und fein ausgelöst werden.

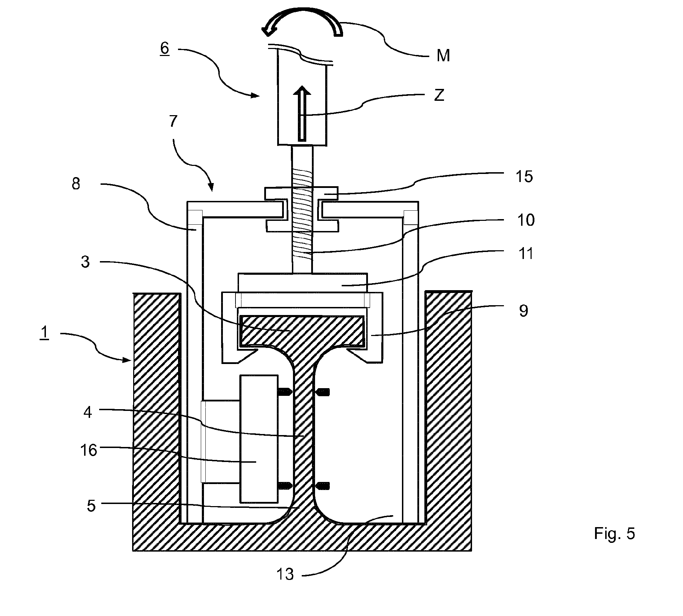

Fig. 5 zeigt den schematischen Schnitt durch das Werkstück 1 aus Fig. 1 mit dem zweiten Werkzeug 6 und dem Zugspindelsystem als Zugprüfvorrichtung 7.

Das Zugspindelsystem weist neben dem Zugaufnahmemittel 9, dem Zugmittel 10 und dem Kraftmesser 11 ein Mittel 8 zur Abstützung auf. Das Mittel 8 ist als ein statisches Joch ausgebildet und liegt an seinem offenen Ende in einem ausgefrästen Bereich 13 des Werkstücks 1 auf. Das Zugmittel 8 ist als ein Bolzen ausgebildet.

Ferner weist das Zugspindelsystem ein Führungsmittel 15 für den Bolzen auf. Das Führungsmittel 15 weist eine Gewindebohrung auf. In die Gewindebohrung ist der mit einem Gewinde versehener Bolzen (Gewinde-oder Schraubbolzen) eingeschraubt. Der Bolzen weist ein oberes Ende und ein unteres Ende auf. Das obere Ende des Bolzens ist mit dem zweiten Werkzeug 6 drehfest verbunden. Das untere Ende des Bolzens ist am Kraftmesser angeschlossen.

Das Zugspindelsystem ist eingerichtet, infolge einer vom zweiten Werkzeug 6 erzeugten Drehung M, eine Zugprüfung am Prüfkörper 2 auszuführen.

Infolge einer Aktivierung des zweiten Werkzeugs 6 erfährt der Bolzen eine Drehung M, wobei sich das Aufnahmemittel 9 gegenüber dem Mittel 8 in bzw. entlang der Steglängsachse des Prüfkörpers 2 verlagert. Dabei erfährt der Prüfkörper 2 eine Zugbeanspruchung Z.

Zur Erzeugung des Prüfkörpers 2 im Werkstück 1 und zur anschließenden Durchführung der Zugprüfung am Prüfkörper 2 werden folgende Schritte durchlaufen:
- Fräsen des Werkstücks 1 mittels des ersten Werkzeugs zur Erzeugung des Prüfkörpers 2,
- Anbringen eines Aufnahmemittels 9 der Zugprüfvorrichtung 7 am oberen Flansch 3 des Prüfkörpers 2,
- Aufbringen einer Kraft oder eines Moments infolge einer Aktivierung des zweiten Werkzeugs 6 auf die Zugprüfvorrichtung 7 zur Erzeugung einer Zugkraft auf den Prüfkörper 2,
- Durchführen einer Zugprüfung am Prüfkörper 2,
- Bestimmen der Dehnung des Prüfkörpers 2 mittels des Extensometers 16 und Abbilden der Dehnung des Prüfkörpers 2 mittels eines elektronischen Anzeigegeräts,
- Bestimmen der Zugkraft des Prüfkörpers 2 mittels des Kraftmessers 11 und Abbilden der Zugkraft mittels des elektronischen Anzeigegeräts,
- Bestimmen eines Spannung-Dehnungsverhaltens des Prüfkörpers 2 mittels einer Recheneinheit und Abbilden des Spannung-Dehnungsverhaltens mittels des elektronischen Anzeigegeräts und
- Bestimmen des Versagenszeitpunkts des Prüfkörpers 2 und Abbilden des Versagenszeitpunkts mittels des elektronischen Anzeigegeräts.

Durch das Vorsehen der Vorrichtung werden eine bekannte Drehmaschine und eine nachgeschalteter Zugprüfmaschine ersetzt, was eine Zeitersparnis bei weniger Personal mit sich bringt. Mittels der Vorrichtung ist eine vollautomatische, miniaturisierte Zugprüfung im Bauteil realisierbar. Ferner ist eine vollautomatische Proben- bzw. Prüfkörperherstellung erreichbar, wobei der Prüfkörper auch im abgerissen Zustand nach der Zugprüfung im Bauteil verbleiben kann.

### Bezugszeichenliste

- 1: Werkstück
- 2: Prüfkörper
- 3: Flansch
- 4: Steg
- 5: Bereich
- 6: Werkzeug
- 7: Zugprüfvorrichtung
- 8: Mittel
- 9: Aufnahmemittel
- 10: Zugmittel
- 11: Kraftmesser
- 12: hydraulischer Antrieb
- 13: Bereich
- 14: Hebel
- 15: Führungsmittel
- 16: Extensometer
- 17: Hydraulikkolben

- M: Drehung
- D: Druckkraft
- Z: Zugkraft

## Patentansprüche

1. Vorrichtung aufweisend
- wenigstens ein erstes Werkzeug zur Erzeugung eines Prüfkörpers (2) in einem Werkstück (1), wobei der erzeugte Prüfkörper (2) dabei zumindest teilweise mit dem Werkstück (1) verbunden bleibt und
- wenigstens ein zweites Werkzeug (6) mit einer angeschlossenen Zugprüfvorrichtung (7) zur Durchführung einer Zugprüfung am erzeugten Prüfkörper (2) im Werkstück (1).

2. Vorrichtung gemäß Anspruch 1, wobei die Zugprüfvorrichtung (7) als ein Zugsystem, ein Hebelsystem, ein Hydrauliksystem oder ein Zugspindelsystem ausgebildet ist.

3. Vorrichtung gemäß einem der vorhergehenden Ansprüche, wobei die Zugprüfvorrichtung (7) ein Aufnahmemittel (9) zur Fixierung am Flansch (3) des Prüfkörpers (2), ein Zugmittel (10) zur Zugaufnahme und einen Kraftmesser (11) zur Bestimmung der Zugkraft des Prüfkörpers (2) aufweist.

4. Vorrichtung gemäß einem der Ansprüche 2 bis 3, wobei das Zugsystem, das Hebelsystem und das Hydrauliksystem eingerichtet sind, infolge einer vom zweiten Werkzeug (6) erzeugten Kraft, eine Zugprüfung am Prüfkörper (2) auszuführen.

5. Vorrichtung gemäß einem der Ansprüche 2 bis 3, wobei das Zugspindelsystem eingerichtet ist, infolge einer vom zweiten Werkzeug (6) erzeugten Drehung, eine Zugprüfung am Prüfkörper (2) auszuführen.

6. Vorrichtung gemäß einem der vorhergehenden Ansprüche, wobei das zweite Werkzeug (6) einen am Prüfkörper (2) anbringbaren Extensometer (16) zur Bestimmung der Dehnung des Prüfkörpers (2) aufweist.

7. Vorrichtung gemäß einem der vorhergehenden Ansprüche, wobei die Vorrichtung (1) eine Recheneinheit aufweist, zur Bestimmung
- der Dehnung des Prüfkörpers(2),
- der Zugkraft des Prüfkörpers(2),
- des Spannung-Dehnungsverhaltens des Prüfkörpers (2) und
- des Versagenszeitpunkts des Prüfkörpers(2)
und ein elektronisches Anzeigengerät zur Abbildung der mit der Recheneinheit bestimmten Werte.

8. Verfahren zur Erzeugung eines Prüfkörpers (2) und zur Durchführung einer Zugprüfung mittels einer Vorrichtung aufweisend
- wenigstens ein erstes Werkzeug, das den Prüfkörper (2) im Werkstück (1) erzeugt, wobei der Prüfkörper (2) dabei zumindest teilweise mit dem Werkstück (1) verbunden bleibt und
- wenigstens ein zweites Werkzeug (6) mit einer angeschlossenen Zugprüfvorrichtung (7), die eine Zugprüfung am erzeugten Prüfkörper (2) im Werkstück (1) durchführt.

9. Verfahren nach Anspruch 8, aufweisend die Schritte
- Fräsen des Werkstücks (1) mittels des ersten Werkzeugs zur Erzeugung des Prüfkörpers (2),
- Anbringen eines Aufnahmemittels (9) der Zugprüfvorrichtung (7) am Flansch (3) des Prüfkörpers (2),
- Aufbringen einer Kraft oder eines Moments infolge einer Aktivierung des zweiten Werkzeugs (6) auf die Zugprüfvorrichtung (7) zur Erzeugung einer Zugkraft auf den Prüfkörper (2) und
- Durchführen einer Zugprüfung am Prüfkörper (2).

10. Verfahren nach Anspruch 9, aufweisend die Schritte:
- Bestimmen der Dehnung des Prüfkörpers (2) mittels eines Extensometers (16) und Abbilden der Dehnung des Prüfkörpers (2) mittels eines elektronischen Anzeigegeräts,
- Bestimmen der Zugkraft des Prüfkörpers (2) mittels eines Kraftmessers (11) und Abbilden der Zugkraft mittels des elektronischen Anzeigegeräts,
- Bestimmen eines Spannung-Dehnungsverhaltens des Prüfkörpers (2) mittels einer Recheneinheit und Abbilden des Spannung-Dehnungsverhaltens mittels des elektronischen Anzeigegeräts und/oder
- Bestimmen des Versagenszeitpunkts des Prüfkörpers des Prüfkörpers (2) und Abbilden des Versagenszeitpunkts mittels des elektronischen Anzeigegeräts.
